# EUROPÄISCHE PATENTSCHRIFT

(11) **EP 1 558 438 B1**
(45) Veröffentlichungstag und Bekanntmachung des Hinweises auf die Patenterteilung: **06.06.2007**
(21) Anmeldenummer: 03769020.3
(22) Anmeldetag: 30.10.2003
(51) Int. Cl.: B29C 47/90

(54) **VORRICHTUNG ZUM KÜHLEN UND KALIBRIEREN VON KUNSTSTOFFPROFILEN**
DEVICE FOR COOLING AND CALIBRATING PLASTIC PROFILED PIECES
APPAREIL DE REFROIDISSEMENT ET DE CALIBRAGE DE PROFILES EN PLASTIQUE

(30) Priorität: 08.11.2002 AT 16882002
(43) Veröffentlichungstag der Anmeldung: 03.08.2005
(73) Patentinhaber: Technoplast Kunststofftechnik Gesellschaft m.b.H., 4563 Micheldorf (AT)
(72) Erfinder: SCHWAIGER, Meinhard, A-4040 Linz (AT)
(74) Vertreter: Babeluk, Michael
(86) Internationale Anmeldenummer: PCT/AT2003/000323
(87) Internationale Veröffentlichungsnummer: WO 2004/041512

(56) Entgegenhaltungen:
- EP-A- 0 425 944
- WO-A-90/10530
- DE-B- 1 187 361
- SU-A- 1 224 162
- US-A- 3 182 108
- US-A- 3 792 951
- US-A- 4 288 905
- US-A- 5 324 371
- US-A- 5 346 379
- US-B1- 6 200 119

## Beschreibung

Die Erfindung betrifft eine Vorrichtung zum Kühlen und Kalibrieren von Kunststoffprofilen gemäß dem Oberbegriff von Patentanspruch 1.

Vorrichtungen dieser Art werden auch Trockenkalibriervorrichtungen genannt, da das Profil nicht in direkten Kontakt mit dem Kühlmedium gelangt. Solche Trockenkalibriervorrichtungen sind zumeist direkt stromabwärts der Extrusionsdüse und stromaufwärts von Kalibrierbädern vorgesehen, bei denen das Profil in einem Wasserbad geführt wird.

In dem ersten Abschnitt der Kalibrierung wird der sehr weiche Kunststoffprofilstrang, der noch nicht über eine ausreichende Eigenstabilität verfügt durch die Trockenkalibriervorrichtungen geführt, wobei mittels Unterdruck ein Kontakt zwischen der Oberfläche des weichen Kunststoffprofilstranges und der Innenfläche des Metallkörpers hergestellt wird. In speziell ausgebildeten Kanälen, die vorzugsweise in der Nähe der Innenfläche des Metallkalibrators angeordnet sind, wird der Metallkörper mit Kühlflüssigkeit, vorzugsweise mit Kühlwasser, durchflutet, so dass neben einer exakten Formgebung auch eine Wärmeabfuhr aus dem Profil erfolgt. Aufgrund der hohen Anforderungen an die optischen Eigenschaften der Kunststoffprofiloberfläche hat der Kühl- und Kalibriervorgang in diesem ersten Abschnitt vollständig trocken zu erfolgen. Nach einer von der sogenannten Extrusionsgeschwindigkeit, Wandstärke und Verarbeitungstemperatur der Kunststoffschmelze abhängigen ersten Kühlzeit bildet sich eine feste Außenschicht im Kunststoffprofilstrang und verleiht diesem eine erste Eigenstabilität. Ab dem Zeitpunkt, wo eine genügend ausgeprägte Eigenstabilität (genügend große erstarrte bzw. erkaltete Außenschicht) vorliegt, kann der Profilstrang in einem zweiten Abschnitt in einem Kühltank, in dem der Profilstrang mit Kühlmedium umspült und gegebenenfalls unter Unterdruck gesetzt ist, auf seine Endtemperatur, in der Regel Umgebungstemperatur, abgekühlt werden. Derartige Kühltanks sind für die Herstellung von Hohlkammerprofilen als Vakuumtanks mit turbulenten Kühlmedienströmungen ausgeführt und besitzen mehrere sogenannte Stütz- oder Kalibrierblenden. Für die Herstellung von einfacheren bzw. offenen Profilformen sind sie jedoch als nach oben offenes Wasserbad ausgeführt.

Bedingt durch die ungünstigen Wärmeleiteigenschaften der dickwandigen Metallkörper erfolgt im Verhältnis zu einer direkten Wärmeabfuhr aus dem Profilstrang mittels Kühlmedienbeaufschlagung nur eine vergleichsweise langsame und ungleichmäßige Abkühlung der Profiloberfläche. Ein weiterer Nachteil liegt in den wesentlich höheren Herstellkosten eines Metallkalibrators gegenüber jenen eines Kühltanksystems. Ein weiterer Nachteil der bestehenden Trockenkalibriersysteme resultiert aus der Tatsache, dass zur Erzeugung des erforderlichen Unterdruckes in den sogenannten Vakuumschlitzen bzw. Vakuumkammern, ein Vielfaches an Energie durch Strömungsverluste vernichtet wird und die zur Erzeugung des Unterdruckes eingesetzten Vakuumpumpen aufgrund der ungünstigen Pumpenkennlinien nur bedingt und in einem sehr kleinen Bereich regelbar sind. Beispielhaft sei angeführt, dass der Energiebedarf für den Betrieb der Vakuumpumpen ca. 70% - 80% des Gesamtenergiebedarfs eines Kalibriertisches beträgt.

Aus der EP 0 925 905 A der Anmelderin ist eine Vorrichtung zum Abkühlen und Kalibrieren von extrudierten Kunststoffprofilen bekannt. Bei dieser Vorrichtung handelt es sich um eine Nasskalibrierung, bei der das Profil über eine längere Wegstrecke in direktem Kontakt mit dem Kühlmedium steht, das sich im Inneren der Vorrichtung befindet. Auf diese Weise ist ein sehr guter Wärmeübergang zwischen dem Profil und dem Kühlmedium gewährleistet, so dass eine rasche Abkühlung erreicht werden kann. Um eine unerwünschte Aufweitung des Profils zufolge des im Inneren der Vorrichtung vorliegenden Vakuums an der stromaufwärtigen Seite zu verhindern, sind in dem Wassertank Kalibrierhülsen vorgesehen, die die Profilwände flächig abstützen können. Das Profil selbst steht jedoch über die gesamt Länge der Vorrichtung mit dem Kühlwasser in Kontakt, so dass die Anwendung dieser bekannten Vorrichtung nur stromabwärts von herkömmlichen Trockenkalibriereinrichtungen möglich ist, in denen die erste Abkühlung und Verfestigung des Profils stattfindet. Diese Trockenkalibriereinrichtungen besitzen jedoch die oben beschriebenen Nachteile.

Die GB 1 202 961 A zeigt eine Kalibriervorrichtung für Kunststoffrohre mit einem Kalibrierwerkzeug, das Vakuumkammern aufweist. Diese Vakuumkammern sind durch Öffnungen mit dem Lumen verbunden, um die Außenkontur des Rohres an die Hülse anzusaugen. Weiters ist in herkömmlicher Weise ein Kühlwasserraum in dem Werkzeug vorgesehen, um die Wärme des Profilstranges des Rohres schnellstmöglich abzuführen. Somit besitzt das bekannte Werkzeug einerseits ein Vakuumsystem und andererseits ein Kühlwassersystem, das vom Vakuumsystem getrennt ist. Der Aufbau der Vorrichtung wird dadurch aufwendig, und die Kühlwirkung ist im Bereich der Vakuumräume verschlechtert.

Aus der SU 1 224 162 A ist eine Kalibriervorrichtung für Rohre bekannt, die ein Hülse aufweist, die über verschiedene Bohrungen mit einem Wassertank in Verbindung steht. Profile mit komplizierterer Geometrie können mit einer solchen Vorrichtung nicht in befriedigender Weise kalibriert werden. Ähnliche Nachteile treffen auf eine Lösung zu, die in der US 5,346,379 A beschrieben ist. In dieser Druckschrift wird ein Kalibrierbad gezeigt, das eine einseitig eingespannte Hülse aufweist, die mit Schlitzen versehen ist. Weiters sind Sprühdüsen vorgesehen, um die Hülse entsprechend mit Kühlwasser zu beaufschlagen.

Allen oben beschriebenen Lösungen ist zudem gemeinsam, dass ein Wechsel der Profilgeometrie nur durch aufwändige Umbaumaßnahmen möglich ist. Die Flexibilität der Fertigung ist aufgrund der hohen Umrüstzeiten daher gering.

Aufgabe der vorliegenden Erfindung ist es, mit einem neuartigen Kalibriersystem die zuvor beschriebenen Nachteile der heute dem Stand der Technik entsprechenden Trockenkalibriersysteme zu vermeiden und gleichzeitig, aufgrund der verbesserten Kühlwirkung, die erforderliche Anzahl an Trockenkalibratoren zu reduzieren sowie die Gesamtlänge der Trockenkalibratoren zu verkürzen.

Eine weitere Aufgabe der Erfindung ist es, eine Vorrichtung anzugeben, mit dem eine Kalibrierung von Kunststoffprofilen ermöglicht wird, wo der Einsatz von Vakuum mittels evakuierter Luft nicht mehr erforderlich ist, und somit sowohl im Betrieb als auch bei der Investition in Produktionsanlagen enorme Kostenvorteile entstehen. Gerade der Entfall an Vakuumpumpen ermöglicht im Betrieb der erfindungsgemäßen Anlage eine drastische Energieeinsparung (bis zu 80 % des Gesamtenergiebedarfs eines Kalibriertisches) und erfüllt damit auch einen ökologischen Anspruch.

Eine besondere Aufgabe der Erfindung ist es, eine größtmögliche Flexibilität im Betrieb und eine hohe Kosteneffizienz zu erreichen.

Erfindungsgemäß werden diese Aufgaben durch die Merkmale von Patentanspruch 1 gelöst.

Wesentlich an der vorliegenden Erfindung ist, dass einerseits eine wesentliche Vereinfachung gegenüber bekannten Trockenkalibriereinrichtungen erreicht werden kann und dass eine deutlich schnellere Abkühlung erzielbar ist. Wie bereits ausgeführt handelt es sich im technischen Sinn um eine Trockenkalibriereinrichtung, die unmittelbar stromabwärts einer Extrusionsdüse angeordnet werden kann, um auch bereits den ersten Abkühlungs- und Kalibrierschritt des noch nicht formstabilen Profils durchführen zu können. Eine hohe Güte der Oberflächen des Profils kann gewährleistet werden, da ein direkter Kontakt der noch weichen Profiloberfläche mit dem Kühlmedium verhindert wird. Der mit dem Kühlmedium gefüllte Innenraum der Vorrichtung ist durch die Hülse von dem Profil getrennt. Es sind lediglich kleine Öffnungen in der Hülse vorgesehen, um das Anliegen des Profils an der Hülse sicherzustellen, wobei als klein im Sinne der Erfindung eine Abmessung verstanden wird, bei der keine Benetzung der Profilwand mit dem Kühlmedium stattfindet. Die Benetzung hängt dabei von dem Ausmaß des Unterdrucks ab, der üblicherweise etwa 0,2 bar unter dem Umgebungsdruck liegt, und der Oberflächenspannung des Kühlmediums an der PVC-Oberfläche des Profils.

Die Öffnungen können dabei teilweise als Bohrungen, das heißt rund ausgebildet sein oder auch als Schlitze, die zumeist senkrecht zur Extrusionsrichtung angeordnet sind. Im Fall der Bohrungen beträgt der Durchmesser vorzugsweise etwa 0,5 mm, wobei Abmessungen bis 1 mm, in Sonderfällen bis etwa 1,5 mm möglich sind, im Fall der Schlitze beträgt die Breite weniger als 1 mm, vorzugsweise weniger als 0,7 mm. Durch die Öffnungen wird ein Unterdruck in dem Raum zwischen der Hülse und dem Profil erzeugt und damit eine genaue Kalibrierung und eine entsprechende Oberflächengüte erreicht. Dementsprechend sind die Öffnungen primär im Bereich der Sichtflächen des Profils angeordnet, das sind jene Flächen, die bei der beabsichtigten Verwendung des Profils sichtbar sind und dementsprechend eine besondere Oberflächengüte aufzuweisen haben.

Gemäß der Erfindung ist vorgesehen, dass die Hülse eine Dicke von weniger als 6%, vorzugsweise weniger als 3% des Durchmessers des zu bearbeitenden Profils aufweist. Da durch die Öffnungen die Druckunterschiede auf den beiden Seiten der Hülse gering sind, ist die mechanische Belastung dementsprechend ebenfalls gering. Daher kann zur Erreichung eines besonders guten Wärmeübergangs eine dünnwandige Ausführung der Hülse gewählt werden.

Der Spalt zwischen dem Profil und der Hülse ist grundsätzlich nie vollständig dicht. Dies beruht zum einen auf der Bewegung des Profils durch die Hülse und zum anderen in einem größeren Umfang auf den im Allgemeinen vorhandenen Freistellungen, das sind Bereiche, in denen die Hülse nicht unmittelbar am Profil anliegt, um die Reibung zu vermindern und um eine Beschädigung vorspringender Profilteile zu verhindern. Solche Freistellungen werden beispielsweise im Bereich von vorstehenden Rippen des Profils vorgesehen. Durch die Öffnungen in dem Spalt zwischen Profil und Hülse hervorgerufenen Unterdruck wird eine - volumsmäßig relativ geringe - von den beiden Stirnseiten der Vorrichtung ausgehende Luftströmung hervorgerufen, die sich entlang der Profiloberfläche ausbreitet und in die Öffnungen fortsetzt. Aus dem Innenraum der Vorrichtung wird diese Falschluft gemeinsam mit dem Kühlmedium abgezogen und in einem Luftabscheider vom Kühlmedium entfernt. Eine solche geringe Luftströmung ist durchaus erwünscht und vorteilhaft für den Kalibriervorgang. Eine weitere Verbesserung kann gemäß einer bevorzugten Ausführungsvariante der Erfindung erreicht werden, wenn die Hülse zusätzlich zu den Öffnungen mindestens eine Luftzufuhröffnung aufweist, die mit einem Luftraum in Verbindung steht. Die Abstimmungsmöglichkeiten des Werkzeugs können insbesondere weiter verbessert werden, wenn die Luftzufuhröffnung über eine Luftzufuhrleitung mit dem Luftraum in Verbindung steht, in der ein Steuerventil angeordnet ist. Bei dieser Ausführung ist es somit möglich, die Zufuhr geringer Luftmengen nicht nur über die Eintritts- und Austrittsöffnungen, sondern auch im Inneren der Vorrichtung vorzusehen.

Um die Strömungsgeschwindigkeit des Kühlmediums und damit den Wärmeübergang zu erhöhen, sind in einer besonderen Ausführungsvariante der Erfindung Strömungsleiteinrichtungen vorgesehen.

Eine wichtiges Merkmal der Erfindung sieht vor, dass das Gehäuse und die Hülse mehrteilig ausgeführt sind und während des Betriebs zerlegbar sind. Je nach Komplexität des zu erzeugenden Profils kann dabei die Hülse zwei- oder mehrteilig ausgebildet sein, wobei die Teilungsflächen bevorzugt parallel zur Längsachse, das heißt zur Extrusionsrichtung, sind. In diesem Zusammenhang ist es nicht unbedingt erforderlich, dass die Teile der Hülse von Gehäuseteilen während des Betriebs trennbar sind, wobei jedoch die grundsätzliche Möglichkeit, die Hülse aus dem Gehäuse auszubauen, im Sinne einer Flexibilität der Produktion grundsätzlich vorteilhaft ist. Wesentlich ist selbstverständlich eine entsprechende Abdichtung der Einzelteile gegeneinander um einen sicheren Betrieb und die Aufrechterhaltung des erforderlichen Unterdrucks gewährleisten zu können.

Weiters ist es besonders bevorzugt, wenn mehrere Gehäuse auf einer gemeinsamen Grundplatte hintereinander angeordnet und in Längsrichtung ausgerichtet sind. Dabei können mehrere erfindungsgemäße Trockenkaliber auf einer gemeinsamen Grundplatte gemeinsam in die Extrusionslinie eingebracht werden und aus dieser entfernt werden, was die Umrüstdauer verringert und die Präzision erhöht. Weiters kann durch eine entsprechende Verbindung der einzelnen Kalibriervorrichtung untereinander mit einer geringeren Anzahl von Anschlüssen das Auslangen gefunden werden.

Eine besonders begünstigte Lösung sieht vor, dass die Ausströmöffnung mit einer selbstansaugenden Wasserpumpe verbunden ist, um den Unterdruck im Innenraum zu erzeugen. Durch den Entfall der Vakuumpumpen kann einerseits der Aufbau des Kalibriertisches wesentlich vereinfacht werden, und andererseits kann der benötigte Energieaufwand deutlich verringert werden. Wie bereits oben ausgeführt, saugen die Wasserpumpen das Kühlmedium gemeinsam mit den allenfalls vorhandenen Luftanteilen an, wodurch der benötigte Unterdruck im Innenraum erzeugt wird.

Besonders günstig ist es, wenn die Öffnungen zumindest teilweise als an der Innenseite der Hülse angeordnete Schlitze ausgebildet sind, die über Bohrungen mit der Außenseite der Hülse in Verbindung stehen. Die Schlitze sind bei dieser Ausführungsvariante auf der Innenseite eingefräst oder dgl., gehen aber nicht bis zur Außenseite durch. Dadurch ist es möglich, den Unterdruck über größere Bereiche der Profils zu verteilen, ohne zu große Querschnitte zu öffnen. Außerdem kann so die mechanische Stabilität der Hülse verbessert werden.

In der Folge wird die vorliegende Erfindung anhand der in den Figuren dargestellten Ausführungsbeispiele näher erläutert. Es zeigen:
- Fig. 1: eine allgemeine Darstellung einer Extrusionslinie in einer axonometrischen Ansicht;
- Fig. 2: ein typischen Kunststoffprofil in einem Querschnitt;
- Fig. 3: eine axonometrische Ansicht einer erfindungsgemäßen Vorrichtung;
- Fig. 4: einen Querschnitt durch eine erfindungsgemäße Vorrichtung;
- Fig. 5: eine seitliche Ansicht der Vorrichtung von Fig. 4;
- Fig. 6: einen Schnitt nach Linie VI-VI in Fig. 4;
- Fig. 7: einen Schnitt nach Linie VII-VII in Fig. 5; und
- Fig. 8: ein Detail einer besonderen Ausführungsvariante im Schnitt..

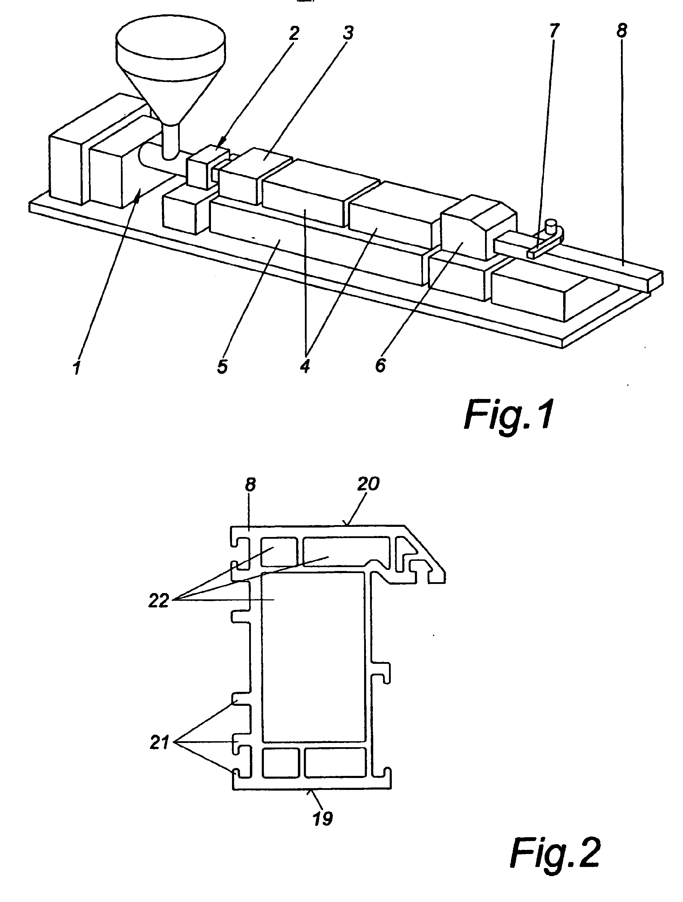

Die Extrusionslinie von Fig. 1 besteht aus einem Extruder mit einer Extrusionsdüse 2, an den ein Kalibriertisch 5 anschließt, auf dem eine Trockenkalibriervorrichtung 3 und zwei Kühltanks 4 angeordnet sind. Stromabwärts des Kalibriertisches 5 ist ein Raupenabzug 6 vorgesehen, an den schließlich eine Säge 7 anschließt. Das Profil ist in dieser Darstellung mit 8 bezeichnet.

In Fig. 2 ist ein Querschnitt des Profils 8 dargestellt. Die Sichtflächen des Profils 8 sind mit 19 und 20 bezeichnet, rippenartige Vorsprünge 21 dienen zur Versteifung und zur Aufnahme von nicht dargestellten Dichtungselementen, und die Hohlkammern des Profils 8 tragen die Bezeichnung 22.

Eine Trockenkalibriervorrichtung nach dem Stand der Technik besteht aus dem eigentlichen Kalibrierblock, der aus einzelnen Teilen zusammengesetzt ist. In dem Kalibrierbock sind in Längsrichtung Kühlwasserbohrungen angeordnet, um das Profil zu kühlen. Um ein Anliegen des Profils an dem Kalibrierblock zu gewährleisten, sind Vakuumschlitze vorgesehen, die über Vakuumbohrungen mit einer Vakuumpumpe verbunden sind. Nachteilig bei bekannten Vorrichtungen ist, dass die Temperaturverteilung oft ungleichmäßig ist. Daraus können Qualitätsprobleme beim fertigen Profil resultieren.

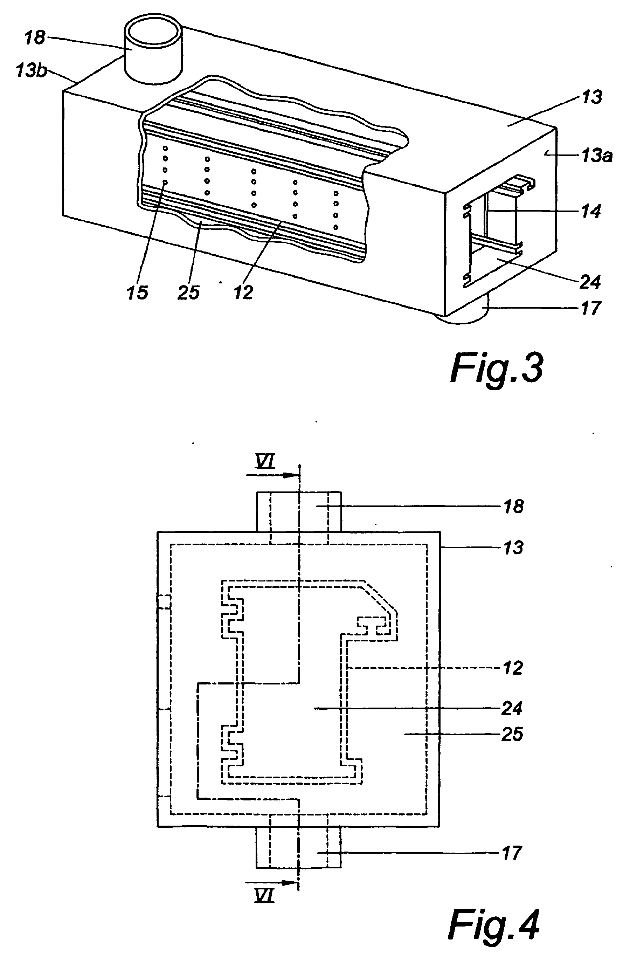

In Fig. 3 ist eine erfindungsgemäße Vorrichtung dargestellt, wobei zum besseren Verständnis ein Teil der Seitenwand weggebrochen ist. Die Vorrichtung besteht aus einem Gehäuse 13 mit Stirnflächen 13a, 13b, zwischen denen sich eine Hülse 12 erstreckt. Die Hülse 12 besitzt eine Mehrzahl von Öffnungen, die in Form von Bohrungen 15 bzw. Schlitzen 14 ausgebildet sind. Diese Öffnungen 14, 15 verbinden das Lumen 24 der Hülse 12 mit dem Innenraum 25 der Vorrichtung, das ist der Raum zwischen dem Gehäuse 13 und der Hülse 12. Der Innenraum 25 steht mit einer Ausströmöffnung 18 für das Kühlmedium in Verbindung, die mit einer nicht dargestellten selbstansaugenden Wasserpumpe verbunden ist, um das Kühlmedium und allenfalls im Innenraum 25 vorliegenden Luft anzusaugen und den erforderlichen Unterdruck herzustellen. Über eine regelbare Einströmöffnung 17 wird das abgesaugte Kühlmedium ergänzt.

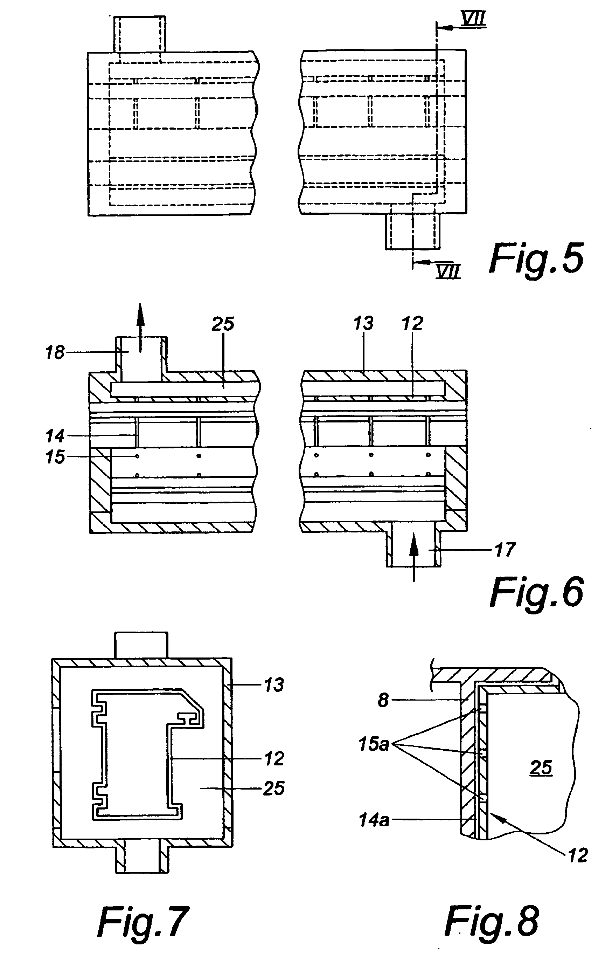

Die Variante von Fig. 8 sieht Schlitze 14a in der Hülse 12 vor, die eine Tiefe von nur etwa der halben Wandstärke der Hülse 12 aufweisen. Nach außen stehen die Schlitze 14a nur über Bohrungen 15a mit dem Innenraum 25 in Verbindung. Dadurch kann eine optimale Verteilung des Vakuums bei geringer wirksamer Querschnittsfläche erreicht werden, die durch die Anzahl und den Durchmesser der Bohrungen 15a bestimmt ist.

Die vorliegende Erfindung ermöglicht es, eine Trockenkalibriereinrichtung mit einer erhöhten Abkühlgeschwindigkeit darzustellen, wodurch die Extrusionsgeschwindigkeit erhöht werden kann und gleichzeitig die Länge der Extrusionslinie verkürzt werden kann. Gleichzeitig wird eine hohe Profilqualität erzielt. Weiters wird aufgrund des Entfalls von den ansonsten üblicherweise erforderlichen Vakuumpumpen zusätzlich Energie eingespart.

## Patentansprüche

1. Vorrichtung zum Kühlen und Kalibrieren von Kunststoffprofilen, mit
- einem Gehäuse (13), das eine Eintrittsöffnung und eine Austrittsöffnung für das zu bearbeitende Profil (8) aufweist;
- einer Hülse (12), die in dem Gehäuse angeordnet ist und die ein Lumen (24) umschließt, das im Wesentlichen der Außenkontur des Profils (8) entspricht und in dem das Profil (8) geführt ist, wobei die Hülse das Profil im Bereich der Vorrichtung im Wesentlichen vollständig umgibt, wobei die Hülse (12) mindestens einen dünnwandigen Abschnitt aufweist, der das Lumen (24) von dem Innenraum (25) trennt und dass in diesem Abschnitt Öffnungen (14, 15) vorgesehen sind, die das Lumen (24) mit dem Innenraum (25) verbinden;
- einem Vakuumsystem zum Erzeugen eines Unterdrucks in dem Spalt zwischen Profil (8) und Hülse (12), das mit Öffnungen (14, 15) in Verbindung steht, die in der Hülse (12) vorgesehen sind; und
- mindestens einem Innenraum (25), der im Betrieb der Vorrichtung mit einem Kühlmedium gefüllt ist und der mit einer Einströmöffnung (17) und einer Ausströmöffnung (18) für ein Kühlmedium in Verbindung steht, um eine Strömung des Kühlmediums im Innenraum (25) zu erzeugen;
**dadurch gekennzeichnet, dass** die Hülse (12) die Eintrittsöffnung mit der Austrittsöffnung verbindet und dass das Gehäuse (13) und die Hülse (12) mehrteilig ausgeführt sind und während des Betriebs zerlegbar sind, sowie dass der dünnwandige Abschnitt der Hülse (12) eine Dicke von weniger als 6%, vorzugsweise weniger als 3% des Durchmessers des zu bearbeitenden Profils (8) aufweist.

2. Vorrichtung nach Anspruch 1, **dadurch gekennzeichnet, dass** die Öffnungen (14, 15) zumindest teilweise als Bohrungen (15) ausgebildet sind, deren Durchmesser kleiner als 1 mm sind und vorzugsweise zwischen 0,5 mm und 0,7 mm liegt.

3. Vorrichtung nach einem der Ansprüche 1 oder 2, **dadurch gekennzeichnet, dass** die Öffnungen (14, 15) zumindest teilweise als Schlitze (14) ausgebildet sind, deren Breite kleiner als 1 mm ist und vorzugsweise etwa 0,7 mm beträgt.

4. Vorrichtung nach einem der Ansprüche 1 bis 3, **dadurch gekennzeichnet, dass** die Hülse (12) zusätzlich zu den Öffnungen (14, 15) mindestens eine Luftzufuhröffnung aufweist, die mit einem Luftraum in Verbindung steht.

5. Vorrichtung nach Anspruch 4, **dadurch gekennzeichnet, dass** die Luftzufuhröffnung über eine Luftzufuhrleitung mit dem Luftraum in Verbindung steht, in der ein Steuerventil angeordnet ist.

6. Vorrichtung nach einem der Ansprüche 1 bis 5, **dadurch gekennzeichnet, dass** im Innenraum (25) Strömungsleiteinrichtungen vorgesehen sind.

7. Vorrichtung nach einem der Ansprüche 1 bis 6, **dadurch gekennzeichnet, dass** das Gehäuse (13) und die Hülse (12) mehrteilig ausgeführt sind und während des Betriebs zerlegbar sind.

8. Vorrichtung nach einem der Ansprüche 1 bis 7, **dadurch gekennzeichnet, dass** mehrere Gehäuse (13) auf einer gemeinsamen Grundplatte hintereinander angeordnet und in Längsrichtung ausgerichtet sind.

9. Vorrichtung nach einem der Ansprüche 1 bis 8, **dadurch gekennzeichnet, dass** die Ausströmöffnung (18) mit einer selbstansaugenden Wasserpumpe verbunden ist, um den Unterdruck im Innenraum zu erzeugen.

10. Vorrichtung nach einem der Ansprüche 1 bis 9, **dadurch gekennzeichnet, dass** die Öffnungen(14, 15) hauptsächlich im Bereich von Sichtflächen des Profils (8) angeordnet sind.

11. Vorrichtung nach einem der Ansprüche 1 bis 10, **dadurch gekennzeichnet, dass** die Öffnungen zumindest teilweise als an der Innenseite der Hülse (12) angeordnete Schlitze (14a) ausgebildet sind, die über Bohrungen (15a) mit der Außenseite der Hülse (12) in Verbindung stehen.

## Claims

1. A device for cooling and calibrating plastic profiles, comprising
- a housing (13) with an entry opening and an exit opening for the profile (8) to be processed, and
- a sleeve (12), which is disposed within the housing and encloses a passage (24) essentially corresponding to the outer contour of the profile (8) and enabling the profile (8) to be guided therein, said sleeve (12) completely surrounding the profile inside the device and having at least one thin-walled section separating the passage (24) from the interior space (25), with openings (14, 15) being positioned in this section, which connect the passage (24) and the interior space (25), and
- a vacuum system for generating a vacuum in the gap between profile (8) and sleeve (12), which system is connected to openings (14, 15) provided in the sleeve (12), and
- at least one interior space (25), which is filled with a cooling medium during operation of the device and is provided with an inflow opening (17) and an outflow opening (18) for the cooling medium such that a flow of the cooling medium can be generated in the interior space (25),
**characterized in that** the sleeve (12) connects the entry opening and the exit opening, and that the housing (13) and the sleeve (12) comprise a plurality of parts and can be disassembled during operation, and that the thin-walled section of the sleeve (12) has a thickness of less than 6%, and preferably less than 3%, of the diameter of the profile (8) to be processed.

2. A device according to claim 1, **characterized in that** the openings (14, 15) are at least partly configured as bores (15), with a diameter of less than 1.0 mm, and preferably between 0.5 and 0.7 mm.

3. A device according to claim 1 or 2, **characterized in that** the openings (14, 15) are at least partly configured as slits (14), whose width is less than 1.0 mm, and preferably about 0.7 mm.

4. A device according to any of claims 1 to 3, **characterized in that** the sleeve (12), in addition to the openings (14, 15), is provided with at least one air feeder opening which communicates with an air chamber.

5. A device according to claim 4, **characterized in that** the air feeder opening communicates with the air chamber via an air feeder line, in which is disposed a control valve.

6. A device according to any of claims 1 to 5, **characterized in that** flow guiding elements are provided in the interior space (25).

7. A device according to any of claims 1 to 6, **characterized in that** the housing (13) and the sleeve (12) comprise a plurality of parts and can be disassembled during operation.

8. A device according to any of claims 1 to 7, **characterized in that** a plurality of housings (13) are positioned on a common ground plate one behind the other and aligned in longitudinal direction.

9. A device according to any of claims 1 to 8, **characterized in that** the outflow opening (18) is connected to a self-priming water pump in order to create the low pressure in the interior space.

10. A device according to any of claims 1 to 9, **characterized in that** the openings (14, 15) are located primarily in areas corresponding to the visible areas of the profile (8).

11. A device according to any of claims 1 to 10, **characterized in that** the openings are configured at least partly as slits (14a) on the interior wall of the sleeve (12), which communicate with the outside of the sleeve (12) via bores (15a).

## Revendications

1. Dispositif pour refroidir et calibrer des profils en matière plastique comprenant :
- un boîtier (13) muni d'un orifice d'entrée et d'un orifice de sortie pour le profil (8) à traiter,
- une gaine (12) installée dans le boîtier et entourant une cavité (24) correspondant pratiquement au contour extérieur du profil (8) et dans laquelle ce profil (8) est guidé,
la gaine entourant pratiquement complètement le profil au niveau du dispositif,
la gaine (12) ayant au moins un segment à paroi mince qui sépare la cavité (24) du volume intérieur (25) et ce segment comporte des ouvertures (14, 15) reliant la cavité (24) au volume intérieur (25),
- un système de vide pour créer une dépression dans l'intervalle entre le profil (8) et la gaine (12), cet intervalle communiquant avec les ouvertures (14, 15) prévues dans la gaine (12) et
- au moins un volume intérieur (25) rempli d'un fluide de refroidissement pendant le fonctionnement du dispositif et coopérant avec un orifice d'entrée (17) et un orifice de sortie (18) pour le fluide de refroidissement, pour créer l'écoulement du fluide de refroidissement dans le volume intérieur (25),
**caractérisé en ce que**
la gaine (12) relie l'orifice d'entrée à l'orifice de sortie et
le boîtier (13) et la gaine (12) sont réalisés en plusieurs parties et peuvent être démontés pendant le fonctionnement et
le segment de gaine (12) à paroi mince a une épaisseur inférieure à 6 % et de préférence inférieure à 3 % du diamètre du profil (8) à traiter.

2. Dispositif selon la revendication 1,
**caractérisé en ce que**
les orifices (14, 15) sont constitués au moins en partie par des perçages (15) dont le diamètre est inférieur à 1 mm et se situe de préférence entre 0,5 mm et 0,7 mm.

3. Dispositif selon l'une des revendications 1 ou 2,
**caractérisé en ce que**
les orifices (14, 15) sont au moins en partie réalisés sous la forme de fentes (14) dont la largeur est inférieure à 1 mm et de préférence environ 0,7 mm.

4. Dispositif selon l'une des revendications 1 à 3,
**caractérisé en ce qu'**
en plus des orifices (14, 15), la gaine (12) comporte au moins un orifice d'alimentation en air relié à un volume d'air.

5. Dispositif selon la revendication 4,
**caractérisé en ce que**
l'orifice d'alimentation en air communique avec la chambre à air par une conduite d'air, chambre dans laquelle se trouve une vanne de commande.

6. Dispositif selon l'une des revendications 1 à 5,
**caractérisé en ce que**
le volume intérieur (25) comporte des installations de guidage de l'écoulement.

7. Dispositif selon l'une des revendications 1 à 6,
**caractérisé en ce que**
le boîtier (13) et la gaine (12) sont réalisés en plusieurs parties et peuvent être démontés pendant le fonctionnement.

8. Dispositif selon l'une des revendications 1 à 7,
**caractérisé en ce que**
plusieurs boîtiers (13) sont installés l'un à la suite de l'autre sur une plaque de base commune et ces boîtiers sont alignés dans la direction longitudinale.

9. Dispositif selon l'une des revendications 1 à 8,
**caractérisé en ce que**
l'orifice d'entrée (18) est relié à une trompe à eau, auto-aspirante, pour créer une dépression dans le volume intérieur.

10. Dispositif selon l'une des revendications 1 à 9,
**caractérisé en ce que**
les orifices (14, 15) sont prévus principalement dans la zone des surfaces visibles du profil (8).

11. Dispositif selon l'une des revendications 1 à 10,
**caractérisé en ce que**
les ouvertures sont au moins partiellement réalisées sous la forme de fentes (14a) sur le côté intérieur du manchon (12), fentes qui communiquent par des perçages (15a) avec le côté extérieur du manchon (12).
